# EUROPÄISCHE PATENTSCHRIFT

(11) **EP 1 722 460 B1**
(45) Veröffentlichungstag und Bekanntmachung des Hinweises auf die Patenterteilung: **26.03.2008**
(21) Anmeldenummer: 05010258.1
(22) Anmeldetag: 11.05.2005
(51) Int. Cl.: H02K 5/173, H02K 15/00, F16C 27/08

(54) **Elektrische Maschine mit vorgespanntem Kugellager und Verfahren zur Herstellung derselben**
Electric machine with pre-loaded roller bearing and method of manufacturing
Machine électrique avec roulement à billes à précontrainte et procédé pour sa fabrication

(43) Veröffentlichungstag der Anmeldung: 15.11.2006
(73) Patentinhaber: VDO Automotive AG, 93055 Regensburg (DE)
(72) Erfinder: Baumgartner, Joachim, 97332 Volkach (DE); Buban, Tobias, 97218 Gerbrunn (DE)

(56) Entgegenhaltungen:
- EP-A- 0 355 656
- WO-A-01/35515
- DE-C- 859 547
- DE-T2- 69 627 557

## Beschreibung

Die Erfindung betrifft eine elektrische Maschine mit vorgespanntem Kugellager sowie ein Verfahren zur Herstellung derselben.

Es sind bereits elektrische Maschinen bekannt, die einen Stator und einen Rotor aufweisen. Der Rotor weist eine Rotorwelle auf, die in Rotorlagern gelagert ist. Derartige elektrische Maschinen finden unter anderem als Antriebe in Hilfsaggregaten in Kraftfahrzeugen Anwendung und können dort beispielsweise als Fensterhebermotor oder als Pumpenantrieb verwendet werden. Bei derartigen Maschinen tritt in der Praxis das Problem auf, dass zwischen dem Stator und dem Rotor Radial- und Axialspiel auftritt. Dies führt im Betrieb zu unerwünschten Geräuschen und weiterhin auch zu einer reduzierten Lebensdauer des Rotorlagers.

Aus der DE 35 34 381 C2 ist bereits eine Anordnung zur Einstellung des Axialspiels zwischen dem Rotor und dem Stator eines Elektromotors bekannt. Bei dieser bekannten Anordnung ist ein betriebsmäßiges Festlager für die Rotorwelle als Zylinderlager ausgebildet. Zur Einstellung des Axialspiels ist das Zylinderlager relativ zu seiner statorseitigen Lagerschildaufnahme durch einen über der betriebsmäßigen Axialbelastung liegenden Druck axial verschiebbar.

Aus der DE 859 547 C ist eine Wälzlagereinrichtung eines Motors bekannt, bei der das Lager in einer oder mehreren Membranen gehalten ist. Die Membranen sind mit Zungen versehen, die eine Nabe bilden und mit Reibung gegen das Lager anliegen. Die äußere Kante der Membran ist mittels Schrauben am Gehäuse des Motors befestigt. Durch ein Anziehen der Schrauben ist die Membran so gebogen, dass sie einen Druck auf den Lageraußenring ausübt und dadurch das Lager axial vorspannt.

Aus der DE 696 27 557 T2 ist eine Haltevorrichtung für ein Wälzlager einer rotierenden Welle auf einer festen Trägerstruktur bekannt. Die Haltevorrichtung enthält wenigstens zwei flexible Platten, die Seite an Seite angeordnet zwischen dem Lager und der Trägerstruktur befestigt sind. Diese Platten sind in einer Richtung axial zu der Welle nachgiebig, so dass das Lager sich im Verhältnis zu der Trägerstruktur in axialer Richtung frei bewegen kann. Während der Befestigung, wenn die Platten keiner axialen Belastung unterliegen, liegt ein Spiel zwischen dem inneren Ring des Lagers und einem Vorsprung der Welle vor. Nach der Befestigung ist dieses Spiel durch die flexible Verformung der beiden Platten ausgeglichen und das Lager axial vorgespannt.

Aus der WO 01/35515 A1 ist ein Gleitlagersystem für eine elektrische Maschine bekannt, welches flexible Klammern aufweist. Dieses bekannte Gleitlagersystem ist aufgrund der Flexibilität der Klammern selbstjustierend. Das Gleitlagersystem sitzt auf der Stirnseite des Stators auf und ist unter Verwendung von Schrauben bzw. Bolzen mit dem Stator verbunden.

Aus der DE 42 06 761 C2 ist eine Lageranordnung für Rotoren elektrischer Maschinen bekannt, die zwei die Enden der Rotorwelle aufnehmende Kugellager enthält. Die Innenringe der beiden Kugellager sind jeweils mittels eines Presssitzes unverschiebbar auf den Lagerflächen der Rotorwelle aufgezogen. Die zugehörigen Außenringe der Kugellager sind in Lagerschilden des Motorgehäuses in Gleitsitz verschiebbar gelagert. Weiterhin weist die bekannte Anordnung eine sich an einem Lagerschild abstützende, axiale Anstellfeder auf, die auf den Außenring eines der Kugellager einwirkt. Die beiden Lagerschilde bestehen aus Blechteilen oder Aluminiumteilen und weisen zylinderförmig ausgebildete, tiefgezogene Lagerstellen auf. Sie werden mittels Abstandsprofilen unter Zugspannung zusammengehalten. Die Anstellfeder ist als Wellfeder realisiert, die sich auf dem Boden einer tiefgezogenen Lagerstelle abstützt und ihre Druckkraft über den Außenring des ersten Kugellagers auf dessen Innenring, von dort über die Rotorwelle auf den Innenring des zweiten Kugellagers und dann auf dessen Außenring überträgt. Dadurch wird eine Lageranordnung geschaffen, bei der bei geringen Kosten und geringer Geräuschentwicklung auch bei hohen radialen Lagerbelastungen eine hohe Lebensdauer erzielt wird.

Ausgehend von der DE 42 06 761 C2 liegt der Erfindung die Aufgabe zugrunde, eine elektrische Maschine anzugeben, deren Bauteileanzahl reduziert ist.

Diese Aufgabe wird durch eine elektrische Maschine mit den im Anspruch 1 angegebenen Merkmalen gelöst. Vorteilhafte Ausgestaltungen und Weiterbildungen der Erfindung sind in den abhängigen Ansprüchen angegeben. Ein Verfahren zur Herstellung einer elektrischen Maschine mit vorgespanntem Kugellager ist im Anspruch gangegeben.

Die Vorteile der Erfindung bestehen insbesondere darin, dass zu einer Vorspannung der Kugellager keine gesonderte Federvorrichtung oder sonstige Stell- oder Justagevorrichtungen notwendig ist. Die gewünschte Vorspannung der Kugellager wird durch zumindest ein axial elastisch verformbares Lagerschild erreicht, mittels dessen zumindest eines der Kugellager beispielsweise um einen Versatz von 0,3 mm bis 0,7 mm vorgespannt wird. Dadurch werden das im Kugellager vorliegende Spiel sowie auch weitere Toleranzen zwischen dem Stator und dem Rotor der elektrischen Maschine ausgeglichen. Dies führt zu einer Erhöhung der Lebensdauer des jeweiligen Kugellagers und vermeidet während des Betriebs des Motors unerwünschte Geräuschentwicklungen.

Ist die elastische Verformung des Lagerschildes zum Stator hin gerichtet, so ergibt sich eine entgegengesetzte Vorspannkraft, welche die Lager in Richtung vom Stator weg vorspannt. Gleichzeitig wird durch die dadurch hervorgerufene Reaktionskraft das Lagerschild gegen den Stator gezogen. Dadurch ergibt sich ein ebenfalls spielfreier Sitz des Lagerschildes auf dem Stator, ohne zusätzliche Befestigungselemente für das Lagerschild.

Die Vorspannung des Lagerschildes, wie oben beschrieben, wird auf besonders einfache Weise erzielt, wenn das entsprechende Lager für die Rotorwelle auf der dem Stator abgewandten Außenseite des Lagerschildes angebracht ist. Das Lager kann beispielsweise in einer Vertiefung auf der Außenseite des Lagerschildes aufgenommen, zentriert und mit einem Presssitz darin befestigt sein. Die Vorspannung kann dann einfach dadurch erzeugt werden, dass beim Aufschieben des Lagers auf die Rotorwelle, zusammen mit dem Lagerschild oder nach vorherigem Aufsetzen des Lagerschildes, das Lager auf der Rotorwelle soweit in Richtung auf das Rotorpaket zu geschoben wird bis die erforderliche elastische Verformung des Lagerschildes erreicht ist.

Die Biegeeigenschaften und damit die Flexibilität eines Lagerschildes werden begünstigt, wenn das Lagerschild einen Außenring, einen Innenring und eine Vielzahl von den Außenring mit dem Innenring verbindende Stege aufweist.

Verlaufen die Stege in Radialrichtung, so erleichtert dies den Herstellungsvorgang des jeweiligen Lagerschildes, da in diesem Fall die zwischen benachbarten Stegen vorliegenden Aussparungen, die vorzugsweise oval geformt sind, durch einfache Ausstanzvorgänge realisiert werden können.

Eine gebogene und nicht in Radialrichtung verlaufende Ausrichtung der Stege hat den Vorteil einer weiteren Verbesserung der Flexibilität bzw. Biegeeigenschaften des jeweiligen Lagerschildes.

Weitere vorteilhafte Eigenschaften der Erfindung ergeben sich aus deren beispielhafter Erläuterung anhand der Figuren. Es zeigt
- Figur 1: eine Schnittdarstellung einer elektrischen Maschine gemäß einem Ausführungsbeispiel für die Erfindung,
- Figur 2: eine vergrößerte Darstellung eines Teilbereichs der in der Figur 1 dargestellten elektrischen Maschine,
- Figur 3: eine perspektivische Skizze eines ersten Ausführungsbeispiels für ein in Axialrichtung flexibles Lagerschild und
- Figur 4: eine perspektivische Skizze eines zweiten Ausführungsbeispiels für ein in Axialrichtung flexibles Lagerschild.

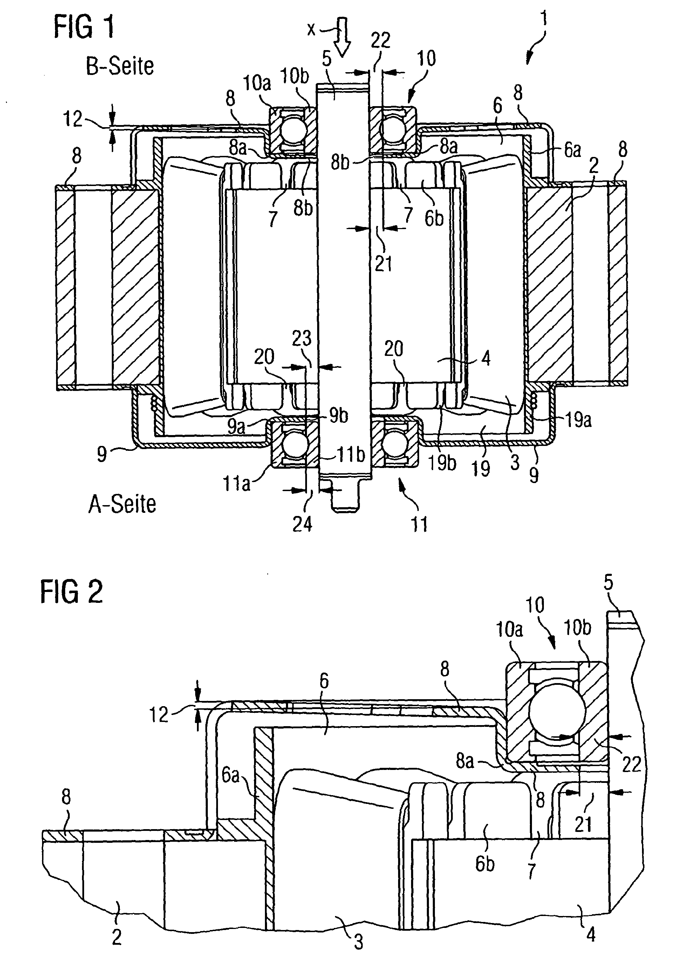

Die Figur 1 zeigt eine Schnittdarstellung einer elektrischen Maschine gemäß einem ersten Ausführungsbeispiel für die Erfindung.

Der dargestellte Elektromotor 1 weist eine Statorbaugruppe auf, die im Wesentlichen aus einem Statorpaket 3 mit einem Statorkern 2 und zwei Isolierendscheiben 6/19 besteht. Weiterhin weist der dargestellte Elektromotor eine Rotorbaugruppe auf, die im Wesentlichen aus einer Rotorwelle 5, und einem Rotorpaket 4 besteht. Die Rotorwelle 5 ist im B-seitigen Endbereich des Elektromotors in einem ersten Kugellager 10 und im A-seitigen Endbereich des Elektromotors in einem zweiten Kugellager 11 gelagert.

Das erste Kugellager 10 weist einen Außenring 10a und einen Innenring 10b auf. Der Innenring 10b ist fest mit der Rotorwelle 5 verbunden. Das zweite Kugellager 11 weist einen Außenring 11a und einen Innenring 11b auf. Der Innenring 11b ist fest mit der Rotorwelle 5 verbunden.

Auf der B-seitigen Stirnfläche des Elektromotors ist eine Isolierendscheibe 6 positioniert. Diese weist eine Außenwand 6a und eine Innenwand 6b mit jeweils einer Vielzahl von zahnförmigen Erhebungen mit dazwischen liegenden Zahnzwischenräumen 7 auf. Auf der gegenüberliegenden A-seitigen Stirnfläche des Elektromotors ist eine entsprechende Isolierendscheibe 19 mit Außenwand 19a und Innenwand 19b angebracht, die ebenfalls aus einer Vielzahl von zahnförmigen Erhebungen mit dazwischenliegenden Zahnzwischenräume 20 besteht.
Das B-seitige Kugellager 10 ist auf der dem Statorpaket abgewandten Außenseite eines Lagerschildes 8 befestigt, welches die B-seitige Stirnfläche des Elektromotors mit Ausnahme des Endbereichs der Rotorwelle überdeckt. Das Lagerschild 8 weist zum Zwecke der Positionierung des Kugellagers 10 eine in der Zeichnung als Stufe 8a erscheinende kreisförmige Vertiefung auf, in welcher das Kugellager 10 außenseitig aufgenommen und ggf. über einen Presssitz fixiert ist. Das radial innere Ende 8b der Stufe 8a des Lagerschildes 8 ist von der Rotorwelle 5 derart beabstandet, dass sich das Lagerschild 8 nicht bis in den Bereich des inneren Ringes 10b des Kugellagers 10 erstreckt. Folglich ist der Abstand 21 des inneren Endes 8b der Stufe 8a des Lagerschildes 8 von der Rotorwelle 5 größer als die Breite 22 des Innenrings 10b des Kugellagers 10.

Das A-seitige Kugellager 11 ist auf der dem Statorpaket abgewandten Außenseite eines Lagerschilds 9 befestigt, welches die A-seitige Stirnfläche des Elektromotors mit Ausnahme des Endbereichs der Rotorwelle überdeckt. Das Lagerschild 9 weist zum Zwecke der Positionierung des Kugellagers 11 eine in der Zeichnung als Stufe 9a erscheinende kreisförmige Vertiefung auf, in welcher das Kugellager 11 außenseitig aufgenommen und ggf. über einen Presssitz fixiert ist. Das radial innere Ende 9b der Stufe 9a des Lagerschildes 9 ist von der Rotorwelle 5 derart beabstandet, dass sich das Lagerschild 8 nicht bis in den Bereich des inneren Ringes 11b des Kugellagers 11 erstreckt. Folglich ist der Abstand 23 des inneren Endes 9b der Stufe 9a des Lagerschildes 9 von der Rotorwelle 5 größer als die Breite 24 des Innenrings 11b des Kugellagers 11.

Weiterhin ist bei dem in der Figur 1 dargestellten Elektromotor 1 das B-seitige Kugellager 10 vorgespannt in dem Sinne, dass zwischen dem Außenring 10a und dem Innenring 10b fertigungsbedingtes Spiel kompensiert ist. Weiterhin wird durch diese Vorspannung auch auf andere Ursachen zurückzuführendes Spiel ausgeglichen.

Um diese Vorspannung des Kugellagers 10 zu ermöglichen, ist das Lagerschild 8 in Axialrichtung elastisch verformbar ausgebildet. Dies bedeutet mit anderen Worten, dass das Lagerschild 8 in Axialrichtung dehnbar bzw. biegbar ist und mit einer vergleichsweise kleinen Federsteifigkeit versehen ist.

Die Vorspannung des Kugellagers 10 wird wie folgt herbeigeführt:

In einem ersten Schritt wird das A-seitige Lagerschild 9 mit dem daran befestigten Kugellager 11 in ein Fertigungswerkzeug eingelegt.

Danach wird in einem zweiten Schritt die Rotorwelle 5 mit daran befestigtem Rotorpaket 4 durch die Mittelöffnung des A-seitigen Lagerschildes 9 in das Kugellager 11 eingesetzt. Die Befestigung des Innenringes 11b des Kugellagers auf der Rotorwelle 5 kann dabei durch einen Presssitz gewährleistet werden.

Dann erfolgt in einem dritten Schritt das Aufsetzen des Stators mit den Isolierendscheiben derart, dass das Statorpaket 3 in Axialrichtung gesehen um das Rotorpaket 4 herum positioniert ist. Danach wird in einem vierten Schritt das B-seitige Lagerschild 8 zusammen mit dem daran befestigtem Kugellager 10 oder auch zunächst das Lagerschild 8 und dann in Folge das Kugellager 10 derart aufgesetzt, dass der radial äußere Bereich des Lagerschildes 8 auf dem Statorkern 2 aufliegt. Auch zwischen dem Lagerschild 8 und dem Statorkern 2 kann ein Presssitz vorgesehen sein.

Schließlich wird in einem fünften Schritt durch Ausübung eines erhöhten Druckes auf die Rotorwelle 5 und/oder den Innenring 10b des Kugellagers und Weiterschieben in Richtung des in der Figur 1 gezeigten Pfeiles x erreicht, dass das axial elastisch verformbare Lagerschild 8 im Bereich der Stufe 8a nach unten (in Richtung auf das Rotorpaket zu) verbogen wird, so dass ein axialer Versatz 12 entsteht, der beispielsweise im Bereich von 0,3 bis 0,7 mm liegt. Durch diesen axialen Versatz des radial innenliegenden Bereiches des Lagerschildes 8 im Vergleich zu dem radial außenliegenden Bereich des Lagerschildes 8 wird gleichzeitig die oben genannte Vorspannung des Kugellagers 10 bewirkt. Der Werkzeugeinsatz ist dabei motorlängenunabhängig.

Die beim Stand der Technik vorgesehene, als Wellfeder realisierte axiale Anstellfeder kann somit eingespart werden, da deren Funktion, nämlich eine Vorspannung des Kugellagers, durch eine Vorspannung des ohnehin vorhandenen Lagerschildes 8 herbeigeführt wird.

Darüber hinaus wird durch die Vorspannung zumindest eines Lagerschildes 8/9 auch eine Reaktionskraft vom Lagerschild 8/9 auf den Statorkern 2 ausgeübt. Dadurch wird der Statorkern 2 zwischen den beiden Lagerschilden (A-Seite/B-Seite) eingespannt. Mit anderen Worten, beide Lagerschilde 8/9 werden gegen die jeweiligen Stirnseiten des Statorkerns 2 gezogen und dadurch zusätzlich auf dem Statorkern 2 fixiert oder zumindest in Position gehalten.

Gemäß einer Ausführungsform der Erfindung ist das A-seitige Lagerschild 9 starr ausgebildet in dem Sinne, dass es eine große Federsteifigkeit aufweist. Bei dieser Ausführungsform wird das Axialspiel des Elektromotors ausschließlich durch eine auf der B-Seite herbeigeführte Vorspannung des Lagerschildes 8 und damit des Kugellagers 10 kompensiert.

Gemäß einer alternativen Ausführungsform der Erfindung ist das A-seitige Lagerschild 8 ebenso wie das B-seitige Lagerschild 9 flexibel ausgebildet, so dass bei dieser alternativen Ausführungsform das Axialspiel durch eine Vorspannung beider Lagerschilder und damit beider Kugellager kompensiert wird.

Die Figur 2 zeigt eine vergrößerte Darstellung eines Teilbereichs der in der Figur 1 dargestellten elektrischen Maschine. Aus dieser vergrößerten Darstellung ist besonders gut ersichtlich, dass das axial elastisch verformbare Lagerschild 8 in Axialrichtung einen Versatz 12 aufweist, der durch eine elastische Verformung des radial innenliegenden Bereiches des Lagerschildes 8 herbeigeführt wurde, und dass durch diese Verformung des Lagerschildes 8 die gewünschte Vorspannung des Kugellagers 10 herbeigeführt wurde, um Axialspiel des Kugellagers 10 und damit des gesamten Elektromotors zu kompensieren. Dadurch wird in vorteilhafter Weise während des Motorbetriebes eine unerwünschte Geräuschentwicklung vermieden. Weiterhin wird dadurch in vorteilhafter Weise eine verlängerte Lebensdauer des Kugellagers erreicht.

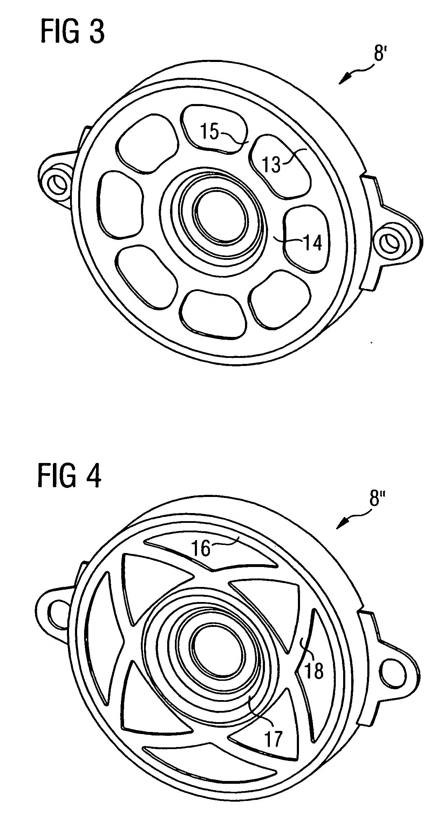

Die Figur 3 zeigt eine perspektivische Skizze eines ersten Ausführungsbeispiels für ein in Axialrichtung flexibles Lagerschild. Das dargestellte Lagerschild 8' weist einen Außenring 13 und einen Innenring 14 auf. Der Außenring 13 ist mit dem Innenring 14 über eine Vielzahl von radial gerichteten Stegen 15 verbunden. Die zwischen benachbarten Stegen vorgesehenen, im Wesentlichen oval ausgebildeten Aussparungen sind durch einen Ausstanzvorgang mittels einer herkömmlichen Stanzmaschine erzeugt worden. Durch Ausüben von Druck in Axialrichtung auf den Innenring 14 bei fest gelagertem Außenring 13 kann der radial innere Bereich des Lagerschildes 8' im Vergleich zum radial äußeren Bereich gebogen werden, so dass - wie es oben beschrieben wurde - durch diese Verbiegung eine Vorspannung des im radial inneren Bereich am Lagerschild befestigten Kugellagers herbeigeführt werden kann.

Die Figur 4 zeigt eine perspektivische Skizze eines zweiten Ausführungsbeispiels für ein in Axialrichtung flexibles Lagerschild. Das dargestellte Lagerschild 8" weist einen Außenring 16 und einen Innenring 17 auf. Der Außenring 16 ist mit dem Innenring 17 über eine Vielzahl von Stegen 18 verbunden, wobei diese Stege 18 gebogen ausgeführt sind und nicht in Radialrichtung verlaufen. Zudem sind die Stege 18 auch axial in Biegerichtung (Spannrichtung) geometrisch vorgebogen. Sie werden dann beim Einbau weiter gebogen, so dass die gewünschte Vorspannung erreicht wird. Bei einer derartigen Ausgestaltung der Stege sind die Biegeeigenschaften des flexiblen Lagerschildes weiter verbessert. Dies hat den Vorteil, dass auch größeres Axialspiel ausgeglichen werden kann.

Oben wurde die Erfindung anhand eines allgemein gehaltenen Ausführungsbeispieles beschrieben, bei welchem der Stator einen Statorkern und eine Statorpaket und der Rotor eine Rotorwelle und eine Rotorpaket aufweist. Die Erfindung ist jedoch bei allen möglichen Arten von Elektromotoren anwendbar, die eine Statorbaugruppe und eine Rotorbaugruppe aufweisen. Die Statorbaugruppe kann eine Statorwicklung oder eine Anordnung von Schalenmagneten enthalten. Die Rotorbaugruppe kann Rotormagnete oder eine Rotorwicklung aufweisen. Es kann sich unter anderem um einen Synchronmotor, einen Asynchronmotor, einen bürstenbehafteten Motor, einen bürstenlosen Motor, usw., handeln.

## Patentansprüche

1. Elektrische Maschine mit einem Stator (2,3) und einem Rotor (4,5), wobei
- der Rotor eine Rotorwelle (5) aufweist, die über mindestens ein Kugellager (10,11) mit mindestens einem Lagerschild (8,9) verbunden ist,
- das Lagerschild in Axialrichtung elastisch verformbar ausgebildet ist und
- das Kugellager in Axialrichtung vorgespannt ist, wobei diese Vorspannung des Kugellagers durch eine Vorspannung des in Axialrichtung elastisch verformbar ausgebildeten Lagerschildes erreicht ist,
**dadurch gekennzeichnet, dass**
- das Lagerschild (8,9) auf der Stirnseite des Stators (2,3) aufsitzt und
- das Lagerschild durch seine Vorspannung in Axialrichtung gegen den Stator gezogen ist.

2. Elektrische Maschine nach Anspruch 1, **dadurch gekennzeichnet, dass** jeweils mindestens ein Kugellager auf der dem Stator abgewandten Außenseite des mindestens einen Lagerschildes angeordnet ist.

3. Elektrische Maschine nach Anspruch 1 oder 2, **dadurch gekennzeichnet, dass** die Rotorwelle (5) in ihren beiden Endbereichen jeweils in einem Kugellager (10,11) gelagert ist, dass die Kugellager (10,11) jeweils mit einem Lagerschild (8,9) verbunden sind, dass eines der Lagerschilder (8) in Axialrichtung elastisch verformbar ausgebildet ist und als Vorspannelement für das Kugellager (10) dient und dass das andere Lagerschild (9) in Axialrichtung starr ausgebildet ist.

4. Elektrische Maschine nach Anspruch 3, **dadurch gekennzeichnet, dass** das in Axialrichtung starr ausgebildete Lagerschild (9) starrer Bestandteil eines Gehäuses oder des Stators der elektrischen Maschine ist.

5. Elektrische Maschine nach Anspruch 1 oder 2, **dadurch gekennzeichnet, dass** die Rotorwelle (5) in ihren beiden Endbereichen jeweils in einem Kugellager (10,11) gelagert ist, dass die Kugellager (10,11) jeweils mit einem Lagerschild (8,9) verbunden sind und dass beide Lagerschilder (8,9) axial flexibel ausgebildet sind und als Vorspannelement für das jeweilige Kugellager (10,11) dienen.

6. Elektrische Maschine nach einem der vorhergehenden Ansprüche, **dadurch gekennzeichnet, dass** das als Vorspannelement dienende Lagerschild (8,8',8") einen Außenring (13,16), einen Innenring (14,17) und eine Vielzahl von den Außenring mit dem Innenring verbindende Stege (15,18) aufweist.

7. Elektrische Maschine nach Anspruch 6, **dadurch gekennzeichnet, dass** die Stege (15) in Radialrichtung verlaufen.

8. Elektrische Maschine nach Anspruch 6, **dadurch gekennzeichnet, dass** die Stege (18) gebogen ausgeführt sind und nicht in Radialrichtung verlaufen.

9. Verfahren zur Herstellung einer elektrischen Maschine mit vorgespanntem Kugellager mit folgenden Schritten:
- Einlegen eines ersten Lagerschildes mit daran befestigtem Kugellager in ein Fertigungswerkzeug,
- Einsetzen der Rotorwelle mit daran befestigtem Rotorpaket in das Kugellager,
- Einsetzen des Statorpaketes und der Isolierendscheiben derart, dass das Statorpaket in Axialrichtung um das Rotorpaket positioniert ist,
- Aufsetzen eines zweiten Lagerschildes zusammen mit einem daran befestigten weiteren Kugellager oder Aufsetzen des zweiten Lagerschildes und des weiteren Kugellagers in Folge derart, dass der radial äußere Bereich des weiteren Lagerschildes auf dem Statorpaket aufliegt und
- Ausübung eines erhöhten Druckes auf die Rotorwelle und/oder den Innenring des weiteren Kugellagers zur weiteren Verschiebung in Axialrichtung derart, dass das weitere Lagerschild in seinem radial innenliegenden Bereich elastisch verbogen wird, um die Vorspannung des Kugellagers herbeizuführen.

## Claims

1. Electrical machine with a stator (2, 3) and a rotor (4, 5), with
- the rotor featuring a rotor shaft (5) connected via at least one ball race (10, 11) to at least one bearing end plate (8, 9),
- the bearing end plate being embodied to allow elastic deformation in the axial direction, and
- the ball race being preloaded in the axial direction, with this preloadng of the ball race being achieved by a preloading of the bearing end plate elastically deformable in the axial direction,
**characterised in that**,
- the bearing end plate (8, 9) rests on the end face side of the stator (2, 3) and
- the bearing end plate is pulled by its preloading in the axial direction against the stator.

2. Electrical machine according to claim 1, **characterised in that** at least one ball race is each case is arranged on the outside of the at least one bearing end plate facing away from the stator

3. Electrical machine according to claim 1 or 2, **characterised in that** the rotor shaft (5) is supported in its two end areas in a ball race (10,11) in each case, that the ball race (10, 11) is connected to a bearing end plate (8, 9) in each case, that one of the bearing end plates (8) is elastically deformable in the axial direction and serves as a preloadng element for the ball race (10) and that the other bearing end plate (9) is embodied rigidly in the axial direction.

4. Electrical machine according to claim 3, **characterised in that** the bearing end plate (9) embodied rigidly in the axial direction is a rigid component of a housing of the stator of the electrical machine.

5. Electrical machine according to claim 1 or 2, **characterised in that** the rotor shaft (5) is supported in its two end areas in a ball race (10, 11) in each case, that the ball race (10, 11) is connected to a bearing end plate (8, 9) in each case and that both bearing end plates (8) are embodied to be elastically flexible and serve as preloadng element for the respective ball race (10, 11).

6. Electrical machine according to one of the previous claims, **characterised in that** the bearing end plate (8, 8', 8") serving as the preloadng element features an outer ring (13,16), an inner ring (14, 17) and a plurality of bars connecting the outer ring to the inner ring (15, 18).

7. Electrical machine according to claim 6, **characterised in that** the bars (15) run in a radial direction.

8. Electrical machine according to claim 6, **characterised in that** the bars (18) are a curved design and do not run in the radial direction.

9. Method for manufacturing an electrical machine with preloaded ball race with the following steps:
- Insertion into a production tool of a first bearing end plate with ball race attached to it,
- Insertion into the ball race of the rotor shaft with the rotor package attached to it,
- Insertion of the stator package and the insulating washers such that the stator package is positioned in the axial direction around the rotor package,
- Putting on a second bearing end plate together with an attached further ball race or putting on the second bearing end plate and the further ball race in turn so that the radial outer area of the further bearing end plate lies against the stator package and
- Exerting an increased pressure on the rotor shaft and/or the inner ring of the further ball race to push it further in an axial direction such that the further bearing end plate is elastically deformed in its radial internal area, in order to introduce the preloading of the ball race.

## Revendications

1. Machine électrique avec un stator (2, 3) et un rotor (4, 5), dans laquelle
- le rotor comporte un arbre de rotor (5) qui est relié à au moins une flasque (8, 9) par l'intermédiaire d'au moins un roulement à billes (10, 11),
- la flasque est conçue pour être déformable élastiquement dans la direction axiale et
- le roulement à billes est précontraint dans la direction axiale, cette précontrainte du roulement à billes étant obtenue par une précontrainte de la flasque conçue pour être déformable élastiquement dans la direction axiale,
**caractérisée en ce que**
- la flasque (8, 9) s'appuie sur le côté frontal du stator (2, 3) et
- la flasque est serrée contre le stator grâce à sa précontrainte dans la direction axiale.

2. Machine électrique selon la revendication 1, **caractérisée en ce qu'**au moins un roulement à billes est disposé sur le côté extérieur opposé au stator d'au moins une flasque.

3. Machine électrique selon la revendication 1 ou 2, **caractérisée en ce que**, dans chacune de ses deux zones d'extrémité, l'arbre de rotor (5) est logé dans un roulement à billes (10, 11), **en ce que** les roulements à billes (10, 11) sont reliés chacun à une flasque (8, 9), **en ce que** l'une des flasques (8) est conçue pour être déformable élastiquement dans la direction axiale et sert d'élément de précontrainte pour le roulement à billes (10) et **en ce que** l'autre flasque (9) est conçue pour être rigide dans la direction axiale.

4. Machine électrique selon la revendication 3, **caractérisée en ce que** la flasque (9) conçue pour être rigide dans la direction axiale est un composant rigide d'un boîtier ou du stator de la machine électrique.

5. Machine électrique selon la revendication 1 ou 2, **caractérisée en ce que**, dans chacune de ses deux zones d'extrémité, l'arbre de rotor (5) est logé dans un roulement à billes (10, 11), **en ce que** les roulements à billes (10, 11) sont reliés chacun à une flasque (8, 9) et **en ce que** les deux flasques (8, 9) sont conçues pour être axialement flexibles et servent d'élément de précontrainte pour le roulement à billes correspondant (10, 11).

6. Machine électrique selon l'une quelconque des revendications précédentes, **caractérisée en ce que** la flasque servant d'élément de précontrainte (8, 8', 8") comporte une bague extérieure (13, 16), une bague intérieure (14, 17) et une pluralité de bras (15, 18) reliant la bague extérieure avec la bague intérieure.

7. Machine électrique selon la revendication 6, **caractérisée en ce que** les bras (15) s'étendent dans la direction radiale.

8. Machine électrique selon la revendication 6, **caractérisée en ce que** les bras (18) sont recourbées et ne s'étendent pas dans la direction radiale.

9. Procédé pour la fabrication d'une machine électrique avec un roulement à billes précontraint, avec les étapes suivantes :
- pose d'une première flasque avec un roulement à billes fixé sur celle-ci dans un outil de fabrication,
- insertion de l'arbre de rotor avec le bloc rotor fixé sur celui-ci dans le roulement à billes,
- insertion du bloc stator et des rondelles d'extrémité isolantes de telle manière que le bloc stator est positionné autour du bloc rotor dans la direction axiale,
- pose d'une deuxième flasque conjointement avec un autre roulement à billes fixé sur celle-ci ou pose de la deuxième flasque et de l'autre roulement à billes à la suite de telle manière que la zone radialement extérieure de l'autre flasque soit posée sur le bloc stator et
- application d'une pression élevée sur l'arbre de rotor et/ou sur la bague intérieure de l'autre roulement à billes pour un déplacement dans la direction axiale de telle sorte que l'autre flasque est recourbée élastiquement dans sa zone radialement intérieure pour générer la précontrainte du roulement à billes.
